# EUROPÄISCHE PATENTSCHRIFT

(11) **EP 3 929 123 B1**
(45) Veröffentlichungstag und Bekanntmachung des Hinweises auf die Patenterteilung: **09.04.2025**
(21) Anmeldenummer: 21174443.8
(22) Anmeldetag: 18.05.2021
(51) Int. Cl.: B65G 67/24

(54) **VERFAHREN UND VORRICHTUNG ZUM ENTLADEN EINES PACKSTUECKE AUFWEISENDEN BEHAELTERS**
METHOD AND APPARATUS FOR DISCHARGING A CONTAINER WITH PACKAGES
PROCÉDÉ ET DISPOSITIF DE DÉCHARGEMENT D'UN RÉCIPIENT CONTENANT DES COLIS

(30) Priorität: 26.06.2020 DE 102020116880
(43) Veröffentlichungstag der Anmeldung: 29.12.2021
(73) Patentinhaber: Deutsche Post AG, 53113 Bonn (DE)
(72) Erfinder: HARTMANN, Bernd, 53501 Grafschaft-Leimersdorf (DE); GRAFE, Wolfram, 18107 Elmenhorst (DE)
(74) Vertreter: Cohausz & Florack

(56) Entgegenhaltungen:
- EP-A1- 2 241 403
- DE-A1- 102015 116 720
- US-A9- 2018 346 264

## Beschreibung

Die Erfindung betrifft ein Verfahren und eine Vorrichtung zum Entladen eines Packstücke aufweisenden Behälters, insbesondere Kofferaufbau, Wechselbehälter oder Rollbehälter.

Es sind bereits unterschiedliche Verfahren zum Entladen von Behältern bekannt, die mit Packstücken beladen sind. Bei diesen Behältern kann es sich um Aufbauten von Nutzfahrzeugen handeln, die beispielsweise als Kofferaufbauten bezeichnet werden. Unter sogenannten Wechselbehälter werden Aufbauten von Nutzfahrzeugen verstanden, die entweder von einem Chassis eines Nutzfahrzeugs getragen werden oder auf Beinen auf dem Untergrund aufstehen. Im letztgenannten Fall, kann das Chassis des Nutzfahrzeugs unter dem Wechselbehälter herausgefahren und die Wechselbehälter an Ort und Stelle zurückgelassen werden. Unter Nutzfahrzeugen werden dabei insbesondere solche Fahrzeuge verstanden, die für den Transport von Packstücken über den öffentlichen Straßenverkehr vorgesehen sind. Zudem kommen aber auch Behälter in Frage, die überwiegend auf Werksgeländen, in Hallen und dergleichen verwendet werden. Solche Behälter können fest mit Rollen versehen sein und werden daher auch oft als Rollbehälter bezeichnet. Rollbehälter werden beispielsweise mit Packstücken beladen und anschließend selbst in Nutzfahrzeugaufbauten verladen.

In den Behältern werden die Packstücke in der Regel mehr oder weniger gestapelt, damit das Volumen der Behälter besser ausgenutzt werden kann. Trotzdem können die Stapel oft recht unregelmäßig sein, damit das Beladen der Behälter nicht zu viel Zeit in Anspruch nimmt. Hinzu kommt, dass die Packstücke oft keine einheitlichen, sondern sehr unterschiedliche Abmessungen aufweisen können, was das Stapeln der Packstücke nur mit Einschränkungen erlaubt. Obwohl die Packstücke oft recht unterschiedliche Abmessungen aufweisen können, werden die Behälter zum Ausnutzen des zur Verfügung stehenden Volumens der Behälter möglichst bis unter das Dach der Behälter beladen, sofern diese ein Dach aufweisen.

Wenn in kurzer Zeit die Packstücke aus sehr vielen Behältern entladen werden sollen, etwa weil diese in kurzer Zeit sortiert und weiterverteilt werden müssen, ist ein effektives und effizientes Entladen der Packstücke aus den Behältern wünschenswert. Hierzu sind schon unterschiedliche Verfahren vorgeschlagen worden, die sich unterschiedlicher Hilfsmittel wie Teleskopbandförderer bedienen. In den meisten Fällen erfolgt das Entladen der Packstücke aus den Behältern aber durch Personen, die die Packstücke entnehmen und so dann auf ein Förderband, etwa ein Teleskopbandförderer legen, das die Packstücke zur weiteren Bearbeitung, Sortierung und/oder Umverteilung transportiert. All diese Verfahren sind jedoch recht aufwendig und hinsichtlich der Kosten noch nicht zufriedenstellend.

Die Druckschrift DE 10 2015 116720 A1 offenbart ein Verfahren zum Entladen eines Packstücke aufweisenden Laderaum eines Lastkraftwagens mit einem ersten Handelement. Das erste Handelement weist eine Mehrzahl von Fingerelementen auf, wobei die Fingerelemente jeweils zwei sich gemeinsam von einem Ende des Fingerelements zum gegenüberliegenden Ende des Fingerelements erstreckende flexible Flankenelemente aufweisen. Die zwei flexiblen Flankenelemente der Fingerelemente sind über eine Mehrzahl von Stegen jeweils flexibel miteinander verbunden, so dass die Fingerelemente jeweils von einer gekrümmten Stellung in eine gestreckte Stellung und zurück verstellt werden können. Die Packstücke sind in dem Laderaum gestapelt und bilden eine Stirnseite. Das in der Druckschrift DE 10 2015 116720 A1 beschriebene Verfahren weist die folgenden Schritte auf: - das erste Handelement ergreift wenigstens ein Packstück des Stapels von Packstücken und entfernt es von dem Stapel von Packstücken, - das erste Handelement entfernt nacheinander wenigstens ein Packstück von dem Stapel von Packstücken und das entfernte Packstück in ein unterhalb des einen Handelements angeordnetes weiteres Handelement bewegt wird, und - das ein zweites Handelement die Packstücke auffängt und gebremst weiterleitet.

Daher liegt der vorliegenden Erfindung die Aufgabe zugrunde, das eingangs genannte und zuvor näher beschriebene Verfahren derart auszugestalten und weiterzubilden, dass das Entladen effektiver und effizienter erfolgen kann.

Diese Aufgabe ist gemäß Anspruch 1 gelöst durch ein Verfahren zum Entladen eines Packstücke aufweisenden Behälters.

Die genannte Aufgabe ist ferner gemäß Anspruch 15 gelöst durch eine Vorrichtung zum Entladen eines Packstücke aufweisenden Behälters.

Das Entladen der Packstücke aus dem Behälter erfolgt erfindungsgemäß mit einem Handelement, das eine Reihe von Fingerelementen umfasst und so das händische Entladen der Packstücke durch eine Person entbehrlich machen kann. Des Weiteren macht sich die Erfindung den sogenannten Fin Ray Effekt zu Nutze, um die bedarfsweise sehr unterschiedliche Abmessungen aufweisenden Packstücke zielgerichtet und ohne Beschädigung entladen zu können.

Die Fingerelemente des Handelements weisen jeweils wenigstens zwei sich gemeinsam von einem Ende des Fingerelements zum gegenüberliegenden Fingerelement erstreckende flexible Flankenelemente auf. Hierbei bietet es sich insbesondere an, wenn die Flankenelemente die Oberseite und die Unterseite jedes Fingerelements bilden, so dass die Packstücke stets von einem Flankenelement ergriffen werden. Zwingend erforderlich ist dies jedoch nicht. Die flexiblen Flankenelemente jedes Fingerelements sind jedoch über eine Mehrzahl von Stegen jeweils flexibel miteinander verbunden, so dass die Fingerelemente die nötige Flexibilität erhalten, um von wenigstens einer gekrümmten Stellung in wenigstens eine gestreckte Stellung und zurück verstellt werden zu können. Dabei ist es besonders zweckmäßig, wenn die Fingerelemente stufenlos gekrümmt und wieder gestreckt werden können. Dann können die Fingerelemente unterschiedliche gekrümmte Stellungen einnehmen, und zwar jeweils gerade so, wie es für das Ergreifen und Entladen eines bestimmten Packstücks geeignet ist.

Da die Packstücke in dem zu entladenen Behälter mehr oder weniger gleichmäßig gestapelt sind, bilden die Packstücke in dem Behälter eine Stirnseite von aufeinandergestapelten Packstücken. Das Handelement ist daher verschiebbar an einer Schiene einer Schieneneinrichtung gehalten, wobei die Schieneneinrichtung zum Entladen der Packstücke an die Stirnseite des Stapels der Packstücke angenähert wird. Sodann kann mit dem wenigstens einen Handelement wenigstens ein Packstück oder eine Mehrzahl von Packstücken gleichzeitig von dem Stapel an Packstücken ergriffen und heruntergeholt, mithin von dem Stapel an Packstücken entfernt, werden. Damit in einem weiteren Schritt wenigstens ein weiteres Packstück von verbliebenen Stapeln von Packstücken entfernt werden kann, wird das Handelement anschließend entlang der wenigstens einen Schiene verschoben, und zwar so, dass das Handelement an der neuen Position das wenigstens eine weitere Packstück von dem Stapel von Packstücken ergreifen und vom Stapel entfernen kann. So können auch die Packstücke von breiten Stirnseiten gestapelter Packstücke entladen werden. Mit anderen Worten ist es so möglich, auch die Packstücke aus breiten Behältern zu entladen.

Wenn der Behälter bzw. der Stapel von Packstücken eine entsprechende Tiefe aufweist, kann das wenigstens eine Handelement über die Schieneneinrichtung schrittweise an die verbliebene Stirnseite des Stapels an Packstücken angenähert werden, bis alle Packstücke aus dem Behälter entladen worden sind. Dabei bietet es sich dann an, den entsprechenden Behälter scheibenweise zu entladen, wobei die einzelnen Scheiben wenigstens im Wesentlichen vertikale Scheiben des Stapels von Packstücken in dem Behälter sind.

Dabei wird unter einem Stapel eine Vielzahl von wenigstens unregelmäßig aufeinander und nebeneinander angeordneten Packstücken verstanden. Es handelt sich jedoch auch nicht um einen Haufen, bei dem die Packstücke wahllos aufeinander geworfen sind und die Form eines Kegels bilden. Bedarfsweise kann der Stapel von Packstücken abschnittsweise aber auch haufenartige Abschnitte aufweisen.

Der sogenannte Fin Ray Effekt kann bei den Schwanzflossen von Knochenfischen beobachtet werden. Drückt man mit dem Finger seitlich gegen sie, krümmen sich die Flossen nicht weg, sondern biegen sich dem Finger entgegen. Möglich wird dies durch einen speziellen Aufbau der Flossen. Dieser ist bei den Fingerelementen des wenigstens einen Handelements entsprechend nachgebildet.

Die nötige Flexibilität der Fingerelemente kann beispielsweise durch elastische Flankenelemente oder durch eine Gliederkette aus schwenkbar oder gelenkig miteinander verbundenen starren Kettengliedern bereitgestellt werden. Dabei wird eine entsprechende Flexibilität lediglich in eine Raumrichtung gefordert. In den Raumrichtungen senkrecht dazu ist eine Flexibilität nicht zwingend erforderlich. Trotzdem wäre auch eine Flexibilität in zwei zueinander senkrecht stehenden Raumrichtungen denkbar und bedarfsweise auch bevorzugt. Die entsprechende Flexibilität der Flankenelemente erlaubt letztlich eine Krümmung des Fingerelements ausgehend von einer gestreckten Stellung in eine gekrümmte Stellung beispielsweise ähnlich der Krümmung eines Fingers.

Damit die Krümmung des Fingerelements in eine Richtung beispielsweise durch einen Druck gegen das Fingerelement, insbesondere gegen ein Flankenelement, in die entgegengesetzte Richtung ausgelöst werden kann, sind die wenigstens zwei Flankenelemente zwischen den beiden Enden des Fingerelements über eine Mehrzahl von Stegen jeweils flexibel miteinander verbunden. Dabei können die Stege starr ausgebildet und schwenkbar oder gelenkig mit den Flankenelementen verbunden sein. Es können aber, bedarfsweise alternativ zu schwenkbaren oder gelenkigen Verbindungen zu den wenigstens zwei Flankenelementen, auch flexible, insbesondere elastische Stege verwendet werden. Auf diese Weise wird erreicht, dass sich die Stege gegenüber den wenigstens zwei Flankenelementen schwenken können, um so eine Krümmung des Fingerelements von einer gestreckten Stellung in eine gekrümmte Stellung und zurück zu ermöglichen.

Unter einer gestreckten Stellung des Fingerelements kann eine maximal gestreckte und/oder längliche Ausrichtung des Fingerelements verstanden werden. Es kann sich aber auch um eine Stellung handeln, aus der das Fingerelement durch ein weiteres Krümmen in eine gegenüber der gestreckten Stellung weiter gekrümmte Stellung verstellt werden kann. Dementsprechend muss auch die gekrümmte Stellung keine maximal gekrümmte Stellung sein. Die Begriffe gestreckte Stellung und gekrümmte Stellung können also bedarfsweise lediglich relativ, also als relative Positionen zueinander, verstanden werden. Des Weiteren ist zu berücksichtigen, dass die Fingerelemente aus einer gestreckten Stellung in entgegengesetzte Richtung in unterschiedliche gekrümmte Stellungen verstellt werden kann.

Das Fingerelement ermöglicht aufgrund des entsprechenden Aufbaus letztlich eine Anpassung der Form an die Form der zu transportierenden Stückgüter, wenn die Fingerelemente gegen das Stückgut drücken bzw. umgekehrt. Damit kann einerseits eine größere Anlagefläche von Fingerelement und Stückgut bereitgestellt werden, was das Handling des Stückguts verbessert. Zudem kann die Flächenpressung zwischen Fingerelement und Stückgut herabgesetzt werden, was ein beschädigungsfreies Stückguthandling begünstigt.

Der Aufbau des Fingerelements erlaubt aber auch bedarfsweise eine Vorkrümmung einzustellen, auch ohne dass ein Kontakt zwischen dem Fingerelement und dem wenigstens einen Stückgut besteht. Dazu können beispielsweise die Flankenelemente in Längsrichtung des Fingerelements gegeneinander verstellt werden. Dabei krümmt sich das Fingerelement dann von dem Flankenelement weg, das gegenüber dem wenigstens einen weiteren Flankenelement weiter in Längsrichtung zum gegenüberliegenden Ende des Fingerelements verstellt ist.

Um das Fingerelement beispielsweise nicht nur in einer Ebene verstellen zu können, kann das Fingerelement beispielsweise auch drei oder mehr Flankenelemente aufweisen, die untereinander über Stege miteinander verbunden sind. Dabei können die Stege beispielsweise kreuzförmig, sternförmig, rechteckig, quadratisch, oval oder rund ausgebildet sein, um einfach an allen Flankenelementen festgelegt werden zu können. Die entsprechenden Verbindungen sind dabei vorzugsweise entweder schwenkbar oder drehbare ausgebildet und/oder es sind die Stege flexibel ausgebildet.

Dadurch dass mehrere Fingerelemente zum wenigstens einen Handelement zusammengefasst werden, wird das Entladen noch effizienter und effektiver möglich als mit einzelnen Fingern. Die Packstücke können nämlich viel besser und schonender ergriffen werden, um die Packstücke von dem Stapel von Packstücken herunterzuholen. Dabei kann das Handelement gegen die zu entfernenden Packstücke gedrückt werden, wobei sich dann die Fingerelemente infolge des Fin Ray Effekts teilweise um die angrenzenden Packstücke herumlegen, so dass diese Packstücke von den Fingerelementen des Handelements ergriffen werden. Jetzt kann durch eine einfache Bewegung des Handelements das wenigstens eine ergriffene Packstück von dem Stapel von Packstücken entfernt werden. Alternativ oder zusätzlich kann wenigstens ein Fingerelement des wenigstens einen Handelements gekrümmt werden, bevor das Fingerelement mit den zu ergreifenden Packstücken in Kontakt kommt. Die entsprechende Krümmung wird durch eine entsprechende Verstellung der Flankenelemente des Fingerelements in ihrer Längsrichtung bewirkt, was zwangsweise zu einer zunehmenden oder einer abnehmenden Krümmung des Fingerelements führt, je nachdem in welche Richtung die Flankenelemente des Fingerelements gegeneinander verstellt werden. Die Fingerelemente können dann infolge des Kontakts mit den zu entfernenden Packstücken weiter gekrümmt werden oder es können die zu entfernenden Packstücke durch die vorgekrümmten Finger ohne eine weitere Krümmung ergriffen und von dem Stapel von Packstücken entfernt werden.

Unter Packstücken wird bedarfsweise eine besondere Art von Stückgütern verstanden. Packstücke können dann mit Packungen verpackte Waren sein. Packstücke können mithin wenigstens eine Umverpackung aus Papier, Pappe, Gewebe oder Kunststoff aufweisen und beispielsweise als Pakete, Kisten und Behälter sowie als nicht formstabile Gebinde wie Tüten oder Säcke vorliegen.

Der besseren Verständlichkeit halber und zur Vermeidung von unnötigen Wiederholungen werden nachfolgend das Verfahren und die Vorrichtung zur Durchführung des Verfahrens gemeinsam beschrieben, ohne jeweils im Einzelnen zwischen dem Verfahren und der Vorrichtung zu unterscheiden. Für den Fachmann ergibt sich aber dennoch anhand des Kontextes, welches Merkmal jeweils hinsichtlich des Verfahrens und der Vorrichtung besonders bevorzugt ist.

Bei einer ersten besonders bevorzugten Ausgestaltung des Verfahrens wird das wenigstens eine Handelement so in einer Greifrichtung gegen den Stapel von Packstücken gedrückt, dass wenigstens ein Flankenelement wenigstens eines Fingerelements partiell eingedrückt wird. Das partielle Eindrücken des Flankenelements bewirkt ein Verstellen des entsprechenden Fingerelements von einer eher gestreckten in eine eher gekrümmte Stellung. Die Fingerelemente erlauben auf diese Weise ein zuverlässiges und zugleich schonendes Ergreifen der Packstücke. Die Packstücke können somit zweckmäßig vom Stapel von Packstücken entfernt werden, ohne die Packstücke dabei nachhaltig zu beschädigen.

Um das wenigstens eine Fingerelement des wenigstens einen Handelements zielgerichtet verstellen zu können, bietet es sich alternativ oder zusätzlich an, wenn das wenigstens eine Handelement und/oder wenigstens ein Fingerelement über eine Antriebseinheit zum Verstellen der wenigstens zwei Flankenelemente in einer Längsrichtung des Fingerelements gegeneinander angetrieben wird. Dann verstellen sich wenigstens die Flankenelemente wenigstens eines Fingerelements so, dass das entsprechende Fingerelemente gezielt von einer eher gekrümmten in eine eher gestreckte Stellung und/oder zurück verstellt werden kann. Die Verstellung erfolgt dann vorzugsweise in einer Art und Weise, die ein zweckmäßiges Ergreifen und Entfernern von Packstücken von dem Stapel von Packstücken erwarten lässt.

Um zu vermeiden, dass die Packstücke trotz der Fingerelemente beschädigt werden, kann es sich anbieten, wenn das wenigstens eine Handelement und/oder wenigstens eine Fingerelement mit wenigstens einem Drucksensor versehen wird. Dann kann der beim Ergreifen und Entfernen von Packstücken vom Stapel von Packstücken erzeugte und auf das wenigstens eine Handelement bzw. das wenigstens eine Fingerelement ausgeübte Druck erfasst und beispielsweise das Erzeugen höherer Kräfte verhindert werden, wenn ein vorgegebener Druck erreicht oder überschritten wird. In diesem Zusammenhang bietet es sich insbesondere an, wenn der wenigstens eine Drucksensor wenigstens einem Flankenelement zugeordnet wird, um den auf das Flankenelement ausgeübten Druck zu erfassen.

Um die von dem Stapel entfernten Packstücke schnell und zuverlässig abtransportieren zu können, kann es zweckmäßig sein, wenn die von dem Stapel von Packstücken entfernten Packstücke direkt oder wenigstens indirekt auf eine Bandfördereinrichtung, insbesondere umfassend einen Teleskopbandförderer, bewegt werden. Der entsprechende Bandförderer kann die Packstücke dann zu einem Ort der Weiterverarbeitung, Sortierung oder Weiterverteilung transportieren, und zwar bevorzugt mehr oder weniger vereinzelt. Dies vereinfacht die anschließende Handhabung der Packstücke. Besonders schonend und zuverlässig ist es, wenn die von dem Stapel von Packstücken entfernten Packstücke nach unten auf die unterhalb des wenigstens einen Handelements angeordnete Bandfördereinrichtung bewegt werden. Dies erfordert keine aufwendige zusätzliche Handhabung der Packstücke und stellt gleichfalls sicher, dass die von dem Stapel von Packstücken entfernten Packstücke auch zuverlässig abtransportiert werden. Des Weiteren kann bevorzugt wenigstens eine Bandfördereinrichtung verwendet werden, die sich bedarfsweise wenigstens im Wesentlichen über die gesamte Breite des Behälters erstrecken kann, um ein besonders effektives Entladen des Behälters zu ermöglichen. Würde das Entladen dagegen von einer Person erfolgen, könnte sich die wenigstens eine Bandfördereinrichtung nicht über die gesamte Breite des Behälters erstrecken, weil sich die Person zum Entladen entlang des Bodens des Behälters bewegen muss.

Um das wenigstens eine Handelement so steuern zu können, dass der entsprechende Behälter schnell und doch zuverlässig entladen werden kann, bietet es sich an, wenn die Lage des Stapels von Packstücken , die Kontur des Stapels von Packstücken und/oder die Kontur der Stirnseite des Stapels von Packstücken wenigstens teilweise von einem Sensor erfasst wird. So kann der Sensor eine Vorstellung davon vermitteln, wie sich der jeweils zu entladende Stapel von Packstücken, insbesondere zum jeweiligen Zeitpunkt, darstellt. Das Handelement kann dann so bewegt werden, dass der Stapel in für die Packstücke schonender Weise von oben nach unten entladen wird. Dabei bietet es sich der Einfachheit und Zuverlässigkeit halber an, wenn der wenigstens eine Sensor ein optischer Sensor, wie beispielsweise eine Kamera, ist. Unabhängig von der Art des Sensors, kann aber bedarfsweise die Bewegung des Handelements wenigstens teilweise in Abhängigkeit der von dem Sensor erfassten Lage und/oder Kontur des Stapels gesteuert werden.

Damit die Behälter auch dann zweckmäßig entladen werden können, wenn diese hohe Stapel von Packstücken enthalten, kann es vorgesehen sein, dass das wenigstens eine Handelement und/oder die wenigstens eine Schiene abhängig von der Höhe des Stapels von Packstücken, von der Lage des Stapels von Packstücken , von der Kontur des Stapels von Packstücken und/oder von der Kontur der Stirnseite des Stapels von Packstücken nach oben oder unten verstellt wird. Hierbei kann die Schiene beispielsweise zunächst so weit nach oben verstellt werden, dass der Stapel von Packstücken beginnend von oben entladen werden kann. Anschließend kann die wenigstens eine Schiene jeweils so weit nach unten verstellt werden, dass der niedriger gewordene Stapel von Packstücken weiter entladen werden kann. Wenn der Stapel eine gewisse Tiefe aufweist, kann dies wiederholt durchgeführt werden. Dabei wird die Schieneneinrichtung immer schrittweise an die Stirnseite des Stapels von Packungen angenähert.

Um die Effektivität des Entladens der Packstücke zu erhöhen, kann es sich anbieten, wenn das wenigstens eine Handelement abhängig von der Lage des Stapels von Packstücken, von der Kontur des Stapels von Packstücken und/oder von der Kontur der Stirnseite des Stapels von Packstücken längs der wenigstens einen Schiene verschoben wird. Dann kann das Handelement immer dorthin verschoben werden, wo die nächsten Packstücke entladen werden sollten, um den Behälter insgesamt möglichst rasch zu entleeren.

Eine besonders zweckmäßige und für die Packstücke schonende Art des Entladens wird bereitgestellt, wenn wenigstens ein oberes Handelement nacheinander wenigstens ein Packstück von dem Stapel von Packstücken entfernt und das so entfernte wenigstens eine Packstück in wenigstens ein unterhalb des wenigstens einen oberen Handelements angeordnetes weiteres unteres Handelement bewegt wird. Das untere Handelement fängt mithin das wenigstens eine Packstück von dem oberen Handelement auf. Damit ein hoher Durchsatz der entladenen Packstücke bereitgestellt werden kann, bietet es sich an, wenn das wenigstens eine weitere, untere Handelement das jeweils wenigstens eine Packstück von dem wenigstens einen oberen Handelement wenigstens teilweise auffängt und wenigstens teilweise gebremst weiterleitet. So kann ein zügiger und dennoch schonender Packstückfluss beim Entladen des Behälters aufrechterhalten werden.

Dies gilt in besonderem Maße dann, wenn die nacheinander von dem wenigstens einen unteren Handelement aufgenommenen Packstücke vereinzelt nacheinander weitergegeben werden. Dies lässt sich mit dem wenigstens einen unteren Handelement zweckmäßigerweise so erreichen, dass die Fingerelemente des wenigstens einen weiteren unteren Handelements in geeigneter Weise gegeneinander bewegt werden. Diese Bewegung kann der Bewegung der Finger der menschlichen Hand nachempfunden sein, die mehrere Gegenstände hält und nacheinander durch die Finger gleiten lässt.

Wenn das wenigstens eine weitere untere Handelement in Abhängigkeit von der Position des wenigstens einen anderen oberen Handelements zur Seite und/oder in der Höhe verstellt wird, lässt sich sicherstellen, dass das untere Handelement die Packstücke von dem oberen Handelement zuverlässig auffängt. Dies ist insbesondere dann bzw. dann besonders einfach der Fall, wenn das wenigstens eine weitere untere Handelement gemeinsam mit dem wenigstens einen anderen oberen Handelement zur Seite und/oder in der Höhe verstellt wird. Zur weiteren Vereinfachung dieser Verstellung kann es dabei zweckmäßig sein, wenn das wenigstens eine obere Handelement und das wenigstens eine untere Handelement unter Beibehaltung eines wenigstens im Wesentlichen konstanten Abstands zueinander gemeinsam verstellt werden.

Das wenigstens eine weitere untere Handelement kann ganz grundsätzlich an der wenigstens einen Schiene des oberen Handelements verschoben werden. Dies ermöglicht eine einfachere Ausgestaltung der Schieneneinrichtung. Eine flexiblere Verstellung der Handelemente und eine entsprechende Anpassung der Positionen der Handelemente über die Höhe des Stapels an Packstücken im zu entladenden Behälter kann aber grundsätzlich dann erreicht werden, wenn das wenigstens eine untere Handelement an wenigstens einer weiteren unteren Schiene in Längsrichtung der jeweiligen Schiene verschoben wird. Alternativ oder zusätzlich kann die wenigstens eine weitere untere Schienen auch genutzt werden, um das wenigstens eine untere Handelement nach oben oder unten zu verstellen. Letzteres lässt sich einfach und zweckmäßig bewerkstelligen, wenn die wenigstens eine weitere untere Schiene dazu nach oben und/oder nach unten verstellt wird.

Alternativ oder zusätzlich bietet es sich an, wenn das wenigstens eine weitere untere Handelement und/oder die wenigstens eine weitere untere Schiene abhängig von der Höhe des Stapels von Packstücken, von der Lage des Stapels von Packstücken , von der Kontur des Stapels von Packstücken, von der Kontur der Stirnseite des Stapels von Packstücken und/oder von der Position des wenigstens einen oberen Handelements in der Höhe verstellt wird. Auf diese Weise kann ein effizienteres und effektiveres Entladen des Behälters erreicht werden.

Das wenigstens eine weitere Handelement kann alternativ oder zusätzlich auch abhängig von der Lage des Stapels von Packstücken, von der Kontur des Stapels von Packstücken, von der Kontur der Stirnseite des Stapels von Packstücken und/oder von der Position des wenigstens einen oberen Handelements längs der wenigstens einen, insbesondere weiteren unteren, Schiene verschoben werden. Auch so kann ein effizienteres und effektiveres Entladen des Behälters erreicht werden.

Das entsprechende Verfahren lässt sich ohne Weiteres auf das Entladen von Stapeln von Packstücken mit sehr unterschiedlichen Tiefen anwenden, wenn die wenigstens eine Schieneneinrichtung, insbesondere mit der wenigstens einen weiteren unteren Schiene, die wenigstens eine Schiene und/oder die wenigstens eine weitere, untere Schiene in den Behälter hineingefahren wird. Besonders zweckmäßig ist dies, wenn die Schieneneinrichtung und/oder die wenigstens eine entsprechende Schiene schrittweise in den Behälter hineingefahren wird. Dann kann der Stapel von Packstücken zweckmäßigerweise scheibenweise entladen werden.

Nachfolgend wird die Erfindung anhand einer lediglich ein Ausführungsbeispiel darstellenden Zeichnung näher erläutert. In der Zeichnung zeigt
- Fig. 1: ein Fingerelement einer erfindungsgemäßen Bandfördereinrichtung und/oder zur Durchführung der erfindungsgemäßen Verfahren in Seitenansicht,
- Fig. 2A-C: das Funktionsprinzip des Fingerelements aus Fig. 1 beim Verstellen von Flankenelementen gegeneinander,
- Fig. 3: das Funktionsprinzip des Fingerelements aus Fig. 1 beim autoadaptiven Verstellen einer Flanke,
- Fig. 4: eine erfindungsgemäße Bandfördereinrichtung in einer schematischen Seitenansicht,
- Fig. 5: das autoadaptive Anpassen des Fingerelements an ein Stückgut gemäß eines erfindungsgemäßen Verfahrens in einer schematischen Seitenansicht,
- Fig. 6: das Verfahren und die Vorrichtung zum Entladen von Packstücken aus einem Behälter in einer perspektivischer Ansicht,
- Fig. 7: das Verfahren und die Vorrichtung aus Fig. 6 in einer Ansicht von hinten und
- Fig. 8: ein Detail des Verfahrens und der Vorrichtung aus Fig. 6 in einer Seitenansicht.

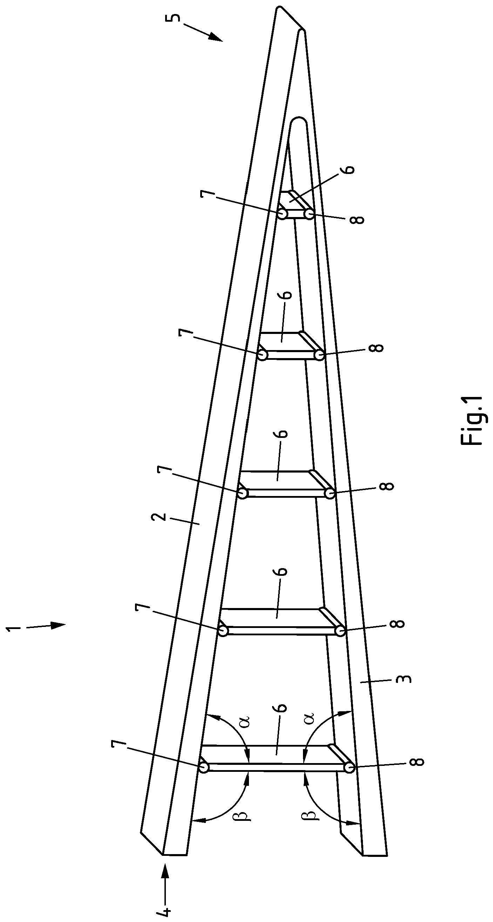

In der Fig. 1 ist ein Fingerelement 1 dargestellt, das ein autoadaptives Verformen ermöglicht. Das Fingerelement 1 weist zwei Flankenelemente 2,3 auf, die bei dem dargestellten und insoweit bevorzugten Fingerelement 1 gemeinsam von einem Ende 4 des Fingerelements 1 zum gegenüberliegenden Ende 5 des Fingerelements 1 verlaufen. Zudem nähern sich die Flankenelemente 2,3 in einer Längsrichtung des Fingerelements 1 kontinuierlich einander an. Während die Flankenelemente 2,3 an einem Ende 4 des Fingerelements 1 voneinander beabstandet sind, sind die Flankenelemente 2,3 am anderen Ende 5 des Fingerelements 1 direkt miteinander verbunden. Daher wird ein sich in eine Richtung verjüngendes, konisch zulaufendes Fingerelement 1 erhalten.

Zwischen den Flankenelementen 2,3 sind über die Länge des Fingerelements 1 verteilt Stege 6 vorgesehen, über die die Flankenelemente 2,3 miteinander verbunden sind. Beim dargestellten und insoweit bevorzugten Fingerelement 1 sind die Stege 6 an beiden gegenüberliegenden Enden 7,8 über Gelenke gelenkig mit den Flankenelementen 2,3 verbunden. Alternativ könnten die Stege 6 flexibel ausgebildet sein. Die Stege 6 sind bei dem dargestellten und insoweit bevorzugten Fingerelement 1 in gleichmäßigen Abständen über die Länge des Fingerelements 1 verteilt. Dies ist jedoch nicht zwingend erforderlich. Auch ist es nicht zwingend erforderlich, dass die Stege 6 wie bei dem dargestellten Fingerelement 1 parallel zueinander verlaufen. Bevorzugt ist es jedoch, dass die Stege 6 mit jedem der Flankenelemente 2,3 auf einer Seite einen spitzen Winkel α und auf der gegenüberliegenden Seite einen stumpfen Winkel β bilden.

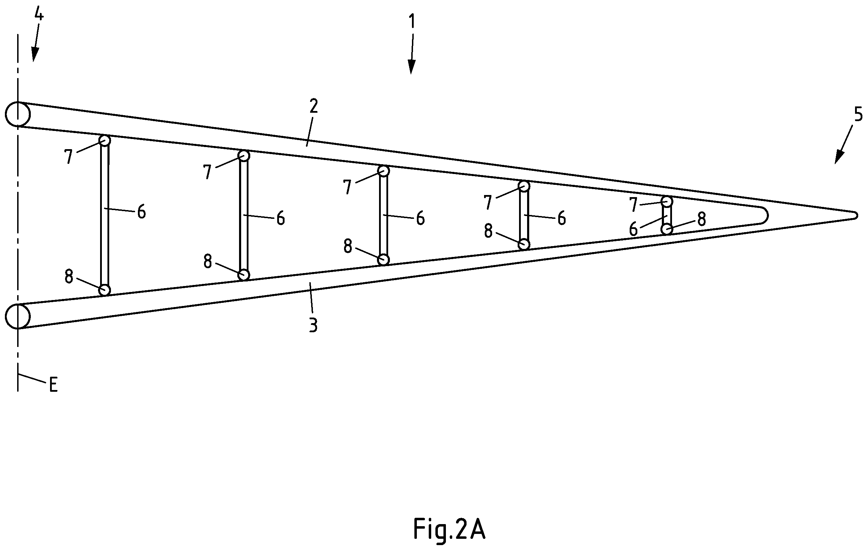

Die dargestellten und insoweit bevorzugten Flankenelemente 2,3 sind flexibel ausgebildet, so dass sich die Flankenelemente 2,3 um eine Achse senkrecht zur Längserstreckung des Fingerelements 1 biegen lassen, was insbesondere in den Fig. 2A-C dargestellt ist. Zu diesem Zweck ist es zweckmäßig, wenn die Flankenelemente 2,3 aus einem flexiblen Kunststoff oder beispielsweise Gummi gebildet sind. Die Stege 6 können ebenfalls aus Kunststoff oder beispielsweise aus einem Metall gebildet sein, da die Stege 6 keine Flexibilität aufweisen müssen. In der Fig. 2A ist das Fingerelement 1 aus Fig. 1 in einer Ausgangsstellung dargestellt, bei der das Fingerelement 1 in einer gestreckten Ausrichtung vorliegt, wobei die freien Enden der Flankenelemente 2,3 in einer Ebene E angeordnet sind. Bei dem dargestellten und insoweit bevorzugten Fingerelement 1 sind die Flankenelemente 2,3 in dieser Stellung wenigstens im Wesentlichen symmetrisch zueinander ausgebildet.

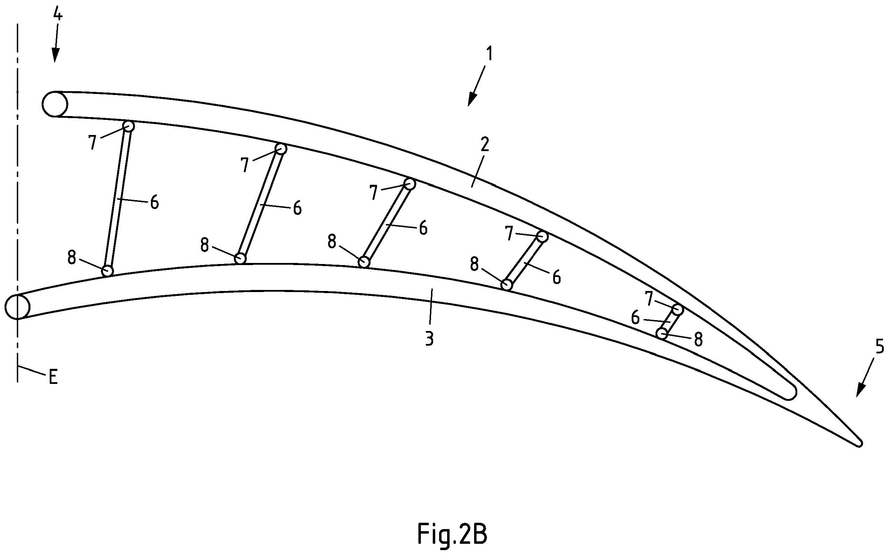

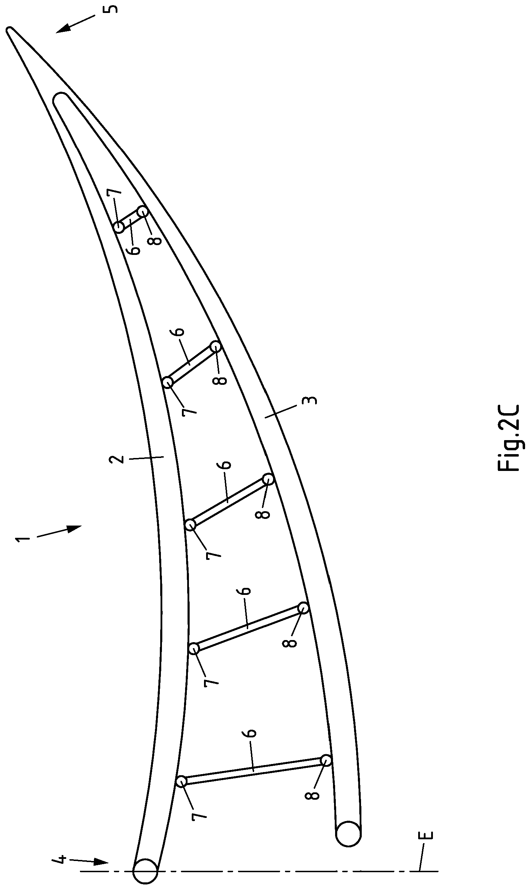

Wenn nun gemäß Fig. 2B gegenüber der Ausgangsstellung das freie Ende des oberen Flankenelements 2 aus der dargestellten Ebene E in Längsrichtung des Fingerelements 1 nach vorne verschoben wird, krümmt sich das Fingerelement 1 infolge der Verbindung der Flankenelemente 2,3 über die Mehrzahl von Stegen 6 nach unten. Es wird auf diese Weise das rechts dargestellte Ende 5 des Fingerelements 1 nach unten verstellt. Analog krümmt sich die Fingereinheit 1 gemäß Fig. 2C nach oben, wobei das entsprechende Ende 5 des Fingerelements 1 nach oben verstellt wird, wenn das freie Ende des unteren Flankenelements 3 in Längsrichtung des Fingerelements 1 aus der Ebene E nach vorne in Richtung der sich krümmenden Spitze des Fingerelements 1 verschoben wird. Den Fig. 2A-C kann ferner entnommen werden, dass die Streben 6 zwischen den Flankenelementen 2,3 sich beim Krümmen des Fingerelements 1 in unterschiedliche Richtungen neigen.

Um das Verschieben der Flankenelemente 2,3 analog zu den Fig. 2A-C zu bewerkstelligen, kann eine nicht dargestellte Antriebseinheit vorgesehen sein. Dabei sind geeignete Antriebseinheiten aus dem Stand der Technik bekannt. Geeignete Antriebseinheiten können beispielsweise wenigstens einen Linearantrieb aufweisen. So kann wenigstens ein Flankenelement 2,3 problemlos in Längsrichtung des Fingerelements 1 vor und zurück verstellt werden.

Nicht dargestellt ist, dass auch mehr als zwei, beispielweise wenigstens drei oder vier, Flankenelemente vorgesehen sein können. Der Einfachheit halber sind diese dann, insbesondere gleichmäßig, verteilt um eine Längsachse des Fingerelements angeordnet. Die mehreren Flankenelemente können dann, insbesondere mit freien Enden, in einer gemeinsamen Spitze des Fingerelements zusammenlaufen. Zudem oder alternativ können die Stege vorzugsweise jeweils alle Flankenelemente miteinander verbinden. Die dargestellten und insoweit bevorzugten Flankenelemente 2,3 sind streifenförmig ausgebildet. Es wäre aber auch eine plattenförmige oder stabförmige Ausgestaltung der Flankenelemente möglich.

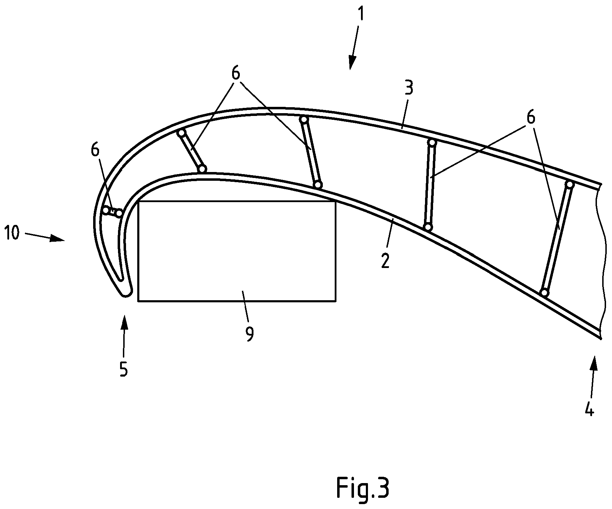

Das beschriebene Fingerelement 1 kann aber noch anders als in den Fig. 2A-C dargestellt verstellt werden, und zwar gemäß Fig. 3, die ein autoadaptives Verstellen eines Flankenelements 2,3 des Fingerelements 1 zeigt, während ein Flankenelement 2 auf ein Packstück 9 drückt und dabei gebogen wird. Das entsprechende Flankenelement 2 wird lokal in Richtung der Druckkraft F nach innen bezogen auf das Fingerelement 1 verschoben, was infolge der Kopplung der Flankenelemente 2,3 über die Stege 6 dazu führt, dass das Flankenelement 2 an einer anderen Stelle, und zwar in Richtung der beiden miteinander verbundenen Enden 10 der Flankenelemente 1 an dem links dargestellten Ende 5 der Fingereinheit 5, in Richtung des Packstücks 9 gekrümmt wird. Dadurch wird das Packstück 9 von dem Fingerelement 1 teilweise umgriffen.

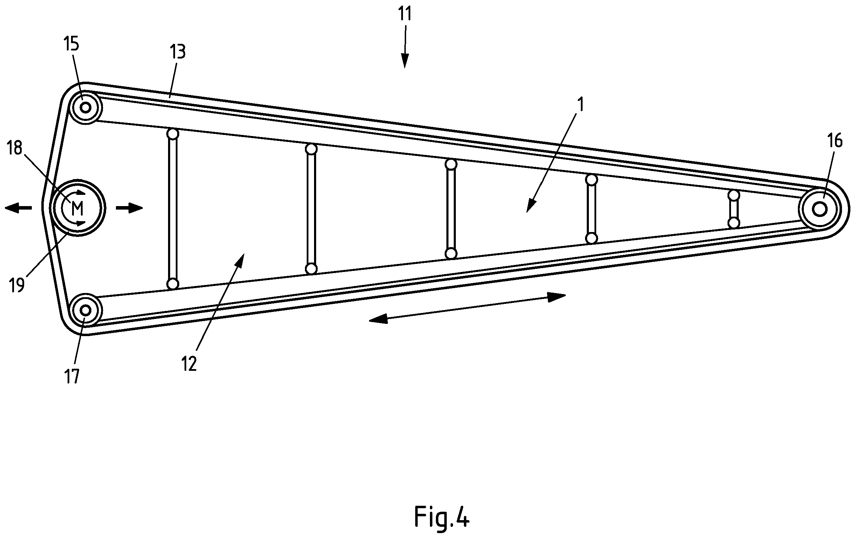

In der Fig. 4 ist eine Bandfördereinrichtung 11 dargestellt, bei der die Tragkonstruktion 12 der Bandfördereinrichtung 11 aus einem Fingerelement 1 gemäß Fig. 1 besteht. Das Förderband 13 der Bandfördereinrichtung 11 läuft um die Tragkonstruktion 12 und damit um das Fingerelement 1 herum. Dazu weist die dargestellte und insoweit bevorzugte Bandfördereinrichtung 11 mehrere Umlenkungen in Form von Umlenkrollen 15,16,17 auf. Eine Umlenkrolle 15 ist an den miteinander verbundenen Enden 10 der Flankenelemente 2,3 vorgesehen, wobei die Umlenkrolle 15 letztlich von dem entsprechenden Ende 5 des Fingerelements 1 getragen und gestützt wird. Ferner ist jeweils eine Umlenkung in Form einer Umlenkrolle 16,17 an den freien Enden der Flankenelemente 2,3 vorgesehen. Des Weiteren ist ein Antrieb 18 vorgesehen, der bei der dargestellten und insoweit bevorzugten Bandfördereinrichtung 13 das Förderband 13 in unterschiedliche Richtungen antreiben kann. Der Antrieb 18 erfolgt über eine Antriebsrolle 19, die bedarfsweise zum Spannen des Förderbands 13 beispielsweise in Längsrichtung des Fingerelements 1 verstellt werden kann. Zudem kann für einen schlupffreien Antrieb des Förderbands 13 an dem Förderband 13 eine Verzahnung vorgesehen sein, die mit einer Verzahnung der Antriebsrolle 19 kämmt. Anders als bei der dargestellten und insoweit bevorzugten Bandfördereinrichtung 11 kann die Tragkonstruktion 12, um die das Förderband 13 umläuft, neben dem Fingerelement 1 noch weitere Tragstrukturteile aufweisen.

Bei der dargestellten und insoweit bevorzugten Bandfördereinrichtung 11 wird das Förderband 13 entlang der Flankenelemente 2,3 geführt, und zwar so nahe, dass das Förderband 13 bedarfsweise durch ein Packstück 9 gegen ein Flankenelement 2,3 gedrückt werden kann. Das Fingerelement 1 kann dabei autoadaptiv oder proaktiv in Bezug auf das entsprechende Packstück 9 verstellt werden, wie dies bereits beschrieben worden ist. Es können bei dem Fingerelement 1 der in der Fig. 4 dargestellten Bandfördereinrichtung 11 also auch die Flankenelemente 2,3 in Längsrichtung des Fingerelements 1 gegeneinander verschoben werden, um das Fingerelement 1 zu krümmen. Mit dem dadurch einhergehenden Verstellen eines Endes 5 des Fingerelements 1 in einer Richtung senkrecht zur Längserstreckung des Fingerelements 1 wird auch das Förderband 13 und dessen Verlauf um das Fingerelement 1 herum verstellt. Wenn das Förderband 13 auch bei einem gekrümmten Fingerelement 1 in geringem Abstand zu den Flankenelementen 2,3 an diesen entlang geführt werden soll, müssen bedarfsweise weitere nicht dargestellte Einrichtungen zum Positionieren des Förderbands 13 zwischen den Umlenkrollen 15,16,17 angrenzend zu den Flankenelementen 2,3 oder wenigstens einem Flankenelement 2,3 vorgesehen werden.

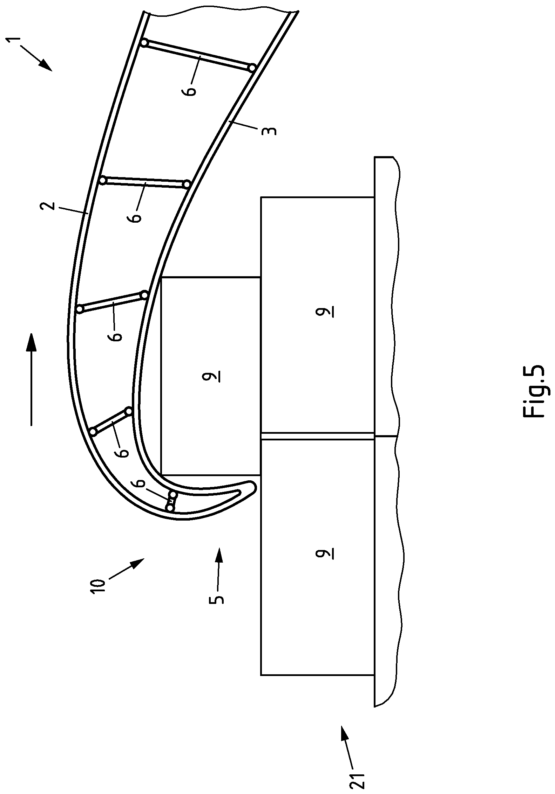

In der Fig. 5 ist eine Verwendung eines Fingerelements 1 als Teil eines oberen Handelements 20 zum Entfernen von auf einem Stapel 21 aus Packstücken 9 liegenden Packstücken 9 schematisch dargestellt. Dabei wird wenigstens ein Packstück 9 von wenigstens einem Fingerelement 22 eines oberen Handelements 20 ergriffen und durch Verstellen der Fingerelemente 22 des oberen Handelements 20 und/oder durch das Verstellen des oberen Handelements 20 selbst von dem Stapel 21 von Packstücken 9 entfernt, und zwar in Richtung des dargestellten Pfeils. Die Krümmung des wenigstens einen Fingerelements 22 des oberen Handelements 20 kann durch einen Druck des Fingerelements 22 gegen das Packstück 9 oder durch Verstellen der Flankenelemente 2,3 gegeneinander hervorgerufen werden.

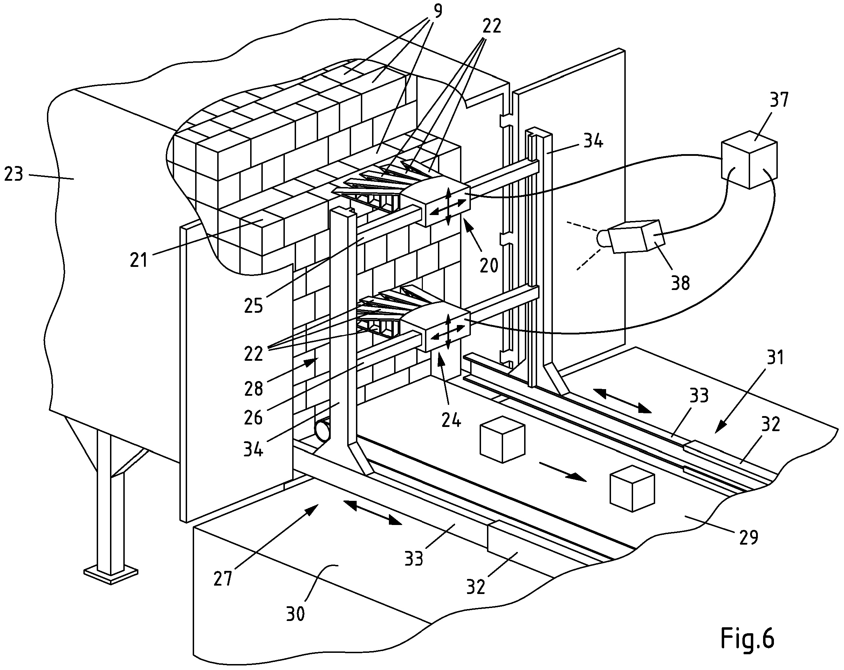

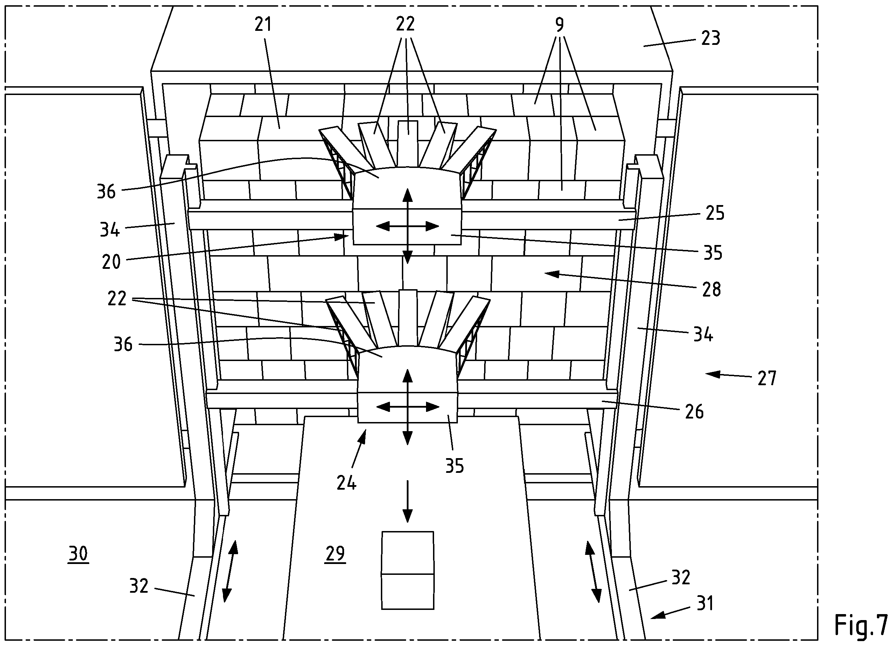

In den Fig. 6 und 7 ist schematisch das Entladen eines gestapelte Packstücke 9 aufweisenden Behälters 23 in Form eine s Wechselbehälters mittels einer Vorrichtung umfassend ein oberes Handelement 20 und eines unteres Handelement 24 dargestellt. Das obere Handelement 20 ist an einer oberen Schiene 25 vorgesehen, während das untere Handelement 24 an einer unteren Schiene 26 vorgesehen ist. Das obere Handelement 20 ist dabei durch einen nicht näher dargestellten Antrieb längs der oberen Schiene 25 verschiebbar an der oberen Schiene 25 gehalten, während das untere Handelement 24 durch einen nicht näher dargestellten Antrieb längs der unteren Schiene 26 verstellbar ist. Als Antriebe kommen hier beispielsweise Linearantriebe, Spindelantriebe und Seilantriebe in Frage. Die obere Schiene 25 und die untere Schiene 26 sind beide Teil einer Schieneneinrichtung 27, wobei die obere Schiene 25 und die untere Schiene 26 in der Schieneneinrichtung 27 höhenverstellbar vorgesehen sind. Die obere Schiene 25 und die untere Schiene 26 können bedarfsweise unabhängig voneinander oder in einem festen Abstand zueinander in der Höhe verstellt werden. Alternativ oder zusätzlich können das obere Handelement 20 und das untere Handelement 24 bedarfsweise unabhängig voneinander oder in einem festen Abstand zueinander längs der oberen Schiene 25 bzw. der unteren Schiene 26 verstellt werden. Die Schieneneinrichtung 27 ist dabei so ausgebildet, dass die Schieneneinrichtung 27 an die Stirnseite 28 des Stapels 21 von Packstücken 9 heranbewegt werden kann.

Dies erfolgt in einer Weise, dass das obere Handelement 20 die an der Stirnseite 28 des Stapels 21 oberen Packstücke 9 ergreifen und von dem Stapel 21 entfernen kann. Dabei kann das obere Handelement 20 je nach der jeweiligen Größe der Packstücke 9 ein Packstück 9 nach dem anderen oder wenigstens teilweise auch jeweils mehrere Packstücke 9 auf einmal von dem Stapel 21 von Packstücken 9 entfernen. Um die obere Reihe der Packstücke 9 des Stapels 21 von Packstücken 9 nacheinander vom Stapel 21 entfernen zu können, wird das obere Handelement 20 kontinuierlich oder schrittweise längs der oberen Schiene 25 und damit entlang der Stirnseite 28 des Stapels 21 von Packstücken 9 verschoben. Das obere Handelement 25 erfasst und ergreift dabei die Packstücke 9 mit den Fingerelementen 22, wie dies grundsätzlich bereits im Zusammenhang mit den Fig. 1 bis 5 beschrieben worden ist. Die Mehrzahl von Fingerelementen 22, bei denen es sich vorliegend beispielsweise um fünf Fingerelemente 22 handelt, erlauben dabei in effizienter und zugleich zuverlässiger Weise das Ergreifen von Packstücken 9 sehr unterschiedlicher Abmessungen und sehr unterschiedlicher Gewichte.

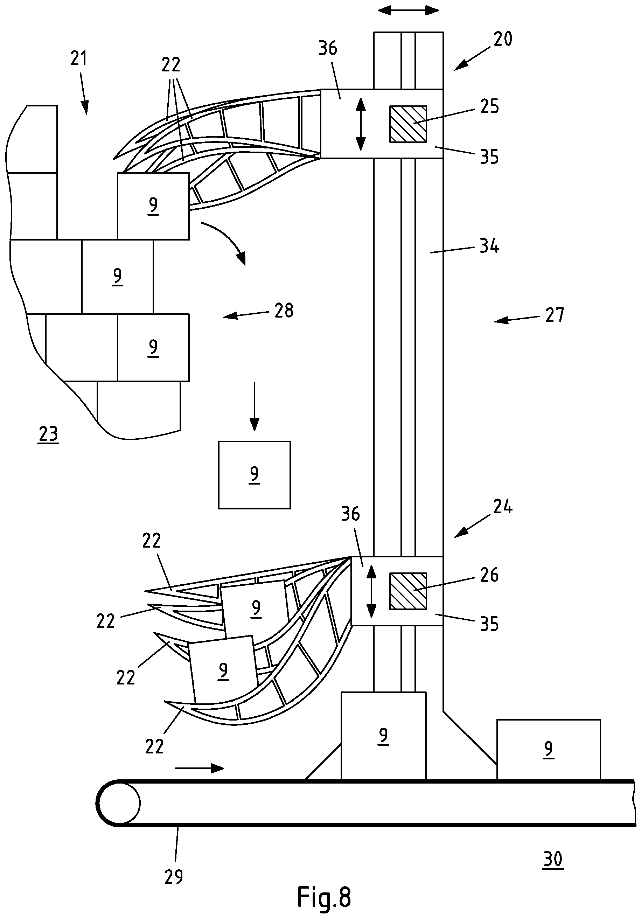

Wenn die Packstücke 9 an der Stirnseite 28 des Stapels 21 von dem oberen Handelement 20 ergriffen und von dem Stapel 21 entfernt worden sind, fallen die Packstücke 9, wie dies in der Fig. 8 dargestellt ist, in das untere Handelement 24, von dem die Packstücke 9 zumindest teilweise aufgefangen und dementsprechend abgebremst werden. Durch eine Bewegung der Fingerelemente 22 gegeneinander können die Packstücke 9 ferner durch das untere Handelement 24 vereinzelt werden, wenn die Packstücke 9 gemeinsam von dem oberen Handelement 24 vom Stapel 21 entfernt werden oder wenigstens gemeinsam von dem unteren Handelement 24 aufgefangen werden. Dabei ist das untere Handelement 24 stets unterhalb des oberen Handelements 20 angeordnet und gibt das untere Handelement 24 die Packstücke 9 an eine unterhalb des unteren Handelements 24 angeordnete Bandfördereinrichtung 29 weiter. Die ganz unten in dem Behälter 23 liegenden Packstücke 9 können bedarfsweise von dem unteren Handelement 24, von dem oberen Handelement 20 oder von einer weiteren Einrichtung ergriffen und auf die Bandfördereinrichtung 29 gelegt werden, und zwar bedarfsweise unter Umgehung des unteren Handelements 24. Während des Entladens des Behälters 23 wird die Schieneneinrichtung 27 schrittweise nachgeführt und auf diese Weise jeweils an die Stirnseite 28 des Stapels 21 an Packstücken 9 angenähert.

Zu diesem Zweck ist bei dem dargestellten Ausführungsbeispiel auf der entsprechenden Rampe 30 ein Schienensystem 31 vorgesehen, das zwei auf der Rampe 30 festgelegte Schienen 32 und zwei daran befestigte und in den Behälter 23 bzw. den Wechselbehälter hinein verschiebbare Schienen 33 umfasst. Die beiden Schienenpaare 32,33 sind dabei wenigstens im Wesentlichen so weit voneinander beabstandet, wie der Laderaum des Behälters 23 breit ist. Die Schienenpaare 32,33 tragen dabei jeweils eine vertikale Stütze 34, zwischen denen die obere Schiene 25 und die untere Schiene 26 zum Tragen der Handelemente 20,24 nach Art einer Traverse vorgesehen sind. Bei dem dargestellten und insoweit bevorzugten Ausführungsbeispiel sind die Handelemente 20,24 an Hülsen 35 montiert, die die Schienen 25,26 umgreifen und entlang der Schienen 25,26 verstellt werden können. Die Fingerelemente 22 der Handelemente 20,24 können bei dem dargestellten und insoweit bevorzugten Ausführungsbeispiel so angeordnet sein, dass die Fingerelemente 22 von einem Handflächenbereich 36 sich leicht seitlich spreizend oder wenigstens im Wesentlichen parallel zueinander vorgesehen sind.

Nicht im Einzelnen dargestellt ist jedem Handelement 20,24, insbesondere den Fingerelementen 22, vorzugsweise jeweils, ein Drucksensor zugeordnet. Die Drucksensoren bedienen sich dabei der Einfachheit halber an sich bekannter Messprinzipien und erfassen den Druck, der jeweils auf das entsprechende Fingerelement 22, insbesondere auf ein Flankenelement 2,3 des Fingerelements 22 ausgeübt wird. Die mit dem Druck korrelierten Signale können dann einer Steuerung 37 zugeführt werden, die dann druckabhängig für eine geeignete Bewegung des entsprechenden Handelements 20,24 bzw. des wenigstens einen Fingerelements 22 sorgt. Des Weiteren ist bei dem dargestellten und insoweit bevorzugten Ausführungsbeispiel ein Sensor 38 vorgesehen, der als optischer Sensor ausgebildet sein kann und der wenigstens abschnittsweise die Lage des Stapels 21 von Packstücken 9, die Kontur des Stapels 21 von Packstücken 9 und/oder die Kontur der Stirnseite 28 des Stapels 21 von Packstücken 9 erfasst. Der Sensor 38 leitet dann vorzugsweise ein mit der wenigstens einen Kontur und/oder der wenigstens einen Lage korreliertes Signals an die Steuerung 37 weiter. Die Steuerung 37 steuert dann die Bewegung und das Verstellen der Handelemente 20,24 und der Fingerelemente 22 so, dass der entsprechende Stapel 21 von Packstücken 9 möglichst effizient und effektiv entladen wird, und zwar in Abhängigkeit von der Lage des Stapels 21 von Packstücken 9, der Kontur des Stapels 21 von Packstücken 9 und/oder der Kontur der Stirnseite 28 des Stapels 21 von Packstücken 9.

### Bezugszeichenliste

- 1: Fingerelement
- 2,3: Flankenelement
- 4,5: Ende Fingerelement
- 6: Steg
- 7,8: Ende Steg
- 9: Packstück
- 10: Ende
- 11: Bandfördereinrichtung
- 12: Tragkonstruktion
- 13: Förderband
- 15: Umlenkrolle
- 16: Umlenkrolle
- 17: Umlenkrolle
- 18: Antrieb
- 19: Antriebsrolle
- 20: oberes Handelement
- 21: Stapel
- 22: Fingerelement
- 23: Behälter
- 24: unteres Handelement
- 25: obere Schiene
- 26: untere Schiene
- 27: Schieneneinrichtung
- 28: Stirnseite
- 29: Bandfördereinrichtung
- 30: Rampe
- 31: Schienensystem
- 32: Schienen
- 33: Schienen
- 34: Stütze
- 35: Hülse
- 36: Handflächenbereich
- 37: Steuerung
- 38: Sensor
- α,β: Winkel
- E: Ebene

## Patentansprüche

1. Verfahren zum Entladen eines Packstücke (9) aufweisenden Behälters (23), insbesondere Kofferaufbau, Wechselbehälter oder Rollbehälter, mit einer wenigstens eine Schiene (25) umfassenden Schieneneinrichtung (27), wobei an der wenigstens einen Schiene (25) wenigstens ein in Längsrichtung der Schiene (25) verschiebbares Handelement (20) vorgesehen ist, wobei das Handelement (20) eine Mehrzahl von Fingerelementen (22) aufweist, wobei die Fingerelemente (22) jeweils wenigstens zwei sich gemeinsam von einem Ende (4) des Fingerelements (22) zum gegenüberliegenden Ende (5) des Fingerelements (22) erstreckende flexible Flankenelemente (2,3) aufweisen, wobei jeweils die wenigstens zwei flexiblen Flankenelemente (2,3) der Fingerelemente (22) über eine Mehrzahl von Stegen (6) jeweils flexibel miteinander verbunden sind, so dass die Fingerelemente (22) jeweils von wenigstens einer gekrümmten Stellung in wenigstens eine gestreckte Stellung und zurück verstellt werden können, wobei die Packstücke (9) in dem Behälter (23) gestapelt sind, wobei die gestapelten Packstücke (9) eine Stirnseite (28) bilden,
- bei dem die Schieneneinrichtung (27) an die Stirnseite (28) der gestapelten Packstücke (9) angenähert wird,
- bei dem das wenigstens eine Handelement (20) wenigstens ein Packstück des Stapels von Packstücken (9) ergreift und von dem Stapel von Packstücken (9) entfernt,
- bei dem das wenigstens eine Handelement (20) nach dem Entfernen des wenigstens einen Packstücks (9) von dem Stapel (21) von Packstücken (9) entlang der wenigstens einen Schiene (25) verschoben wird,
- bei dem das wenigstens eine Handelement (20) nach dem Verschieben entlang des wenigstens einen Schienenelements (25) wenigstens ein weiteres Packstück (9) des Stapels (21) von Packstücken (9) ergreift und von dem Stapel (21) von Packstücken (9) entfernt,
- bei dem das wenigstens eine Handelement (20,24) nacheinander wenigstens ein Packstück (9) von dem Stapel (21) von Packstücken (9) entfernt und das entfernte Packstück (9) in wenigstens ein unterhalb des wenigstens einen Handelements (20) angeordnetes weiteres Handelement (24) bewegt,
- bei dem das wenigstens eine weitere Handelement (24) das jeweils wenigstens eine Packstück (9) wenigstens teilweise auffängt und wenigstens teilweise gebremst weiterleitet und
- bei dem die von dem Stapel (21) von Packstücken (9) entfernten Packstücke (9) nach unten auf eine unterhalb des wenigstens einen weiteren Handelements (24) angeordnete Bandfördereinrichtung (29) bewegt werden.

2. Verfahren nach Anspruch 1,
bei dem das wenigstens eine Handelement (20) so in einer Greifrichtung gegen den Stapel (21) von Packstücken (9) gedrückt wird, so dass wenigstens ein Flankenelement (2,3) wenigstens eines Fingerelements (22) partiell eingedrückt und das wenigstens eine Fingerelement (22) von einer gestreckten Stellung in eine gekrümmte Stellung verstellt wird.

3. Verfahren nach Anspruch 1 oder 2,
bei dem das wenigstens eine Handelement (20,24) und/oder wenigstens eine Fingerelement (22) über eine Antriebseinheit zum Verstellen der wenigstens zwei Flankenelemente (2,3) in einer Längsrichtung des Fingerelements (22) gegeneinander von einer gekrümmten in eine gestreckten Stellung und/oder zurück verstellt wird.

4. Verfahren nach einem der Ansprüche 1 bis 3,
- bei dem das wenigstens eine Handelement (20,24) und/oder wenigstens eine Fingerelement (22) mit wenigstens einem Drucksensor, vorzugsweise an wenigstens einem Flankenelement (2,3), verwendet wird und
- bei dem, vorzugsweise, der wenigstens eine Drucksensor den Druck auf das wenigstens eine Handelement (20,24), auf wenigstens ein Fingerelement (22) und/oder auf wenigstens ein Flankenelement (2,3) wenigstens eines Fingerelements (22) erfasst.

5. Verfahren nach einem der Ansprüche 1 bis 4,
- bei dem die von dem Stapel (21) von Packstücken (9) entfernten Packstücke (9) auf die Bandfördereinrichtung (29), umfassend einen Teleskopbandförderer, bewegt werden.

6. Verfahren nach einem der Ansprüche 1 bis 5,
- bei dem die Lage des Stapels (21) von Packstücken (9), die Kontur des Stapels (21) von Packstücken (9) und/oder die Kontur der Stirnseite (28) des Stapels (21) von Packstücken (9) wenigstens teilweise von einem Sensor (38), vorzugsweise einem optischen Sensor, insbesondere einer Kamera, erfasst wird und
- bei dem, vorzugsweise, die Bewegung des Handelements (20,24) wenigstens teilweise in Abhängigkeit der von dem Sensor erfassten Lage und/oder Kontur des Stapels (21) gesteuert wird.

7. Verfahren nach einem der Ansprüche 1 bis 6,
bei dem das wenigstens eine Handelement (20,24) und/oder die wenigstens eine Schiene (25,26) abhängig von der Höhe des Stapels (21) von Packstücken (9), von der Lage des Stapels (21) von Packstücken (9), von der Kontur des Stapels (21) von Packstücken (9) und/oder von der Kontur der Stirnseite (28) des Stapels (21) von Packstücken (9) nach oben oder unten verstellt wird.

8. Verfahren nach einem der Ansprüche 1 bis 7,
bei dem das wenigstens eine Handelement (20,24) abhängig von der Lage des Stapels (21) von Packstücken (9), von der Kontur des Stapels (21) von Packstücken (9) und/oder von der Kontur der Stirnseite (28) des Stapels (21) von Packstücken (9) längs der wenigstens einen Schiene (25,26) verschoben wird.

9. Verfahren nach einem der Ansprüche 1 bis 8,
- bei dem die nacheinander von dem wenigstens einen Handelement (24) aufgenommenen Packstücke (9) durch ein Bewegen der Fingerelemente (22) des wenigstens einen weiteren Handelements (24) gegeneinander vereinzelt nacheinander weitergegeben werden.

10. Verfahren nach einem der Ansprüche 1 bis 9,
- bei dem das wenigstens eine weitere Handelement (24) in Abhängigkeit von der Position des wenigstens einen anderen Handelements (24) zur Seite und/oder in der Höhe verstellt wird und
- bei dem, vorzugsweise, das wenigstens eine weitere Handelement (24) gemeinsam mit dem wenigstens einen anderen Handelement (20), insbesondere unter Beibehaltung eines wenigstens im Wesentlichen konstanten Abstands zueinander, verstellt wird.

11. Verfahren nach einem der Ansprüche 1 bis 10,
- bei dem das wenigstens eine weitere Handelement (20,24) an der wenigstens einen Schiene (25,26) oder an wenigstens einer weiteren Schiene (34) in Längsrichtung der jeweiligen Schiene (25,26) verschoben und/oder nach oben oder unten verstellt wird und
- bei dem, vorzugsweise, die wenigstens eine weitere Schiene (25,26) nach oben und/oder nach unten verstellt wird.

12. Verfahren nach einem der Ansprüche 1 bis 11,
bei dem das wenigstens eine weitere Handelement (24) und/oder die wenigstens eine weitere Schiene (26) abhängig von der Höhe des Stapels (21) von Packstücken (9), von der Lage des Stapels (21) von Packstücken (9) , von der Kontur des Stapels (21) von Packstücken (9), von der Kontur der Stirnseite (28) des Stapels (21) von Packstücken (9) und/oder von der Position des wenigstens einen oberen Handelements (20) in der Höhe verstellt wird.

13. Verfahren nach einem der Ansprüche 1 bis 12,
bei dem das wenigstens eine weitere Handelement (24) abhängig von der Lage des Stapels (21) von Packstücken (9), von der Kontur des Stapels (21) von Packstücken (9), von der Kontur der Stirnseite (28) des Stapels (21) von Packstücken (9) und/oder von der Position des wenigstens einen oberen Handelements (20) längs der wenigstens einen, insbesondere weiteren, Schiene (26) verschoben wird.

14. Verfahren nach einem der Ansprüche 1 bis 13,
bei dem die wenigstens eine Schieneneinrichtung (27), insbesondere mit der wenigstens einen weiteren Schiene (26), die wenigstens eine Schiene und/oder die wenigstens eine weitere Schiene (26), insbesondere, schrittweise in den Behälter (23) hineingefahren wird.

15. Vorrichtung zum Entladen eines Packstücke (9) aufweisenden Behälters (23), insbesondere Kofferaufbau, Wechselbehälter oder Rollbehälter, nach einem Verfahren der Ansprüche 1 bis 14, mit einer wenigstens eine Schiene (25) umfassenden Schieneneinrichtung (27), wobei an der wenigstens einen Schiene (25) wenigstens ein in Längsrichtung der Schiene (25) verschiebbares Handelement (20) vorgesehen ist, wobei das Handelement (20) eine Mehrzahl von Fingerelementen (22) aufweist, wobei die Fingerelemente (22) jeweils wenigstens zwei sich gemeinsam von einem Ende (4) des Fingerelements (22) zum gegenüberliegenden Ende (5) des Fingerelements (22) erstreckende flexible Flankenelemente (2,3) aufweisen, wobei jeweils die wenigstens zwei flexiblen Flankenelemente (2,3) der Fingerelemente (22) über eine Mehrzahl von Stegen (6) jeweils flexibel miteinander verbunden sind, so dass die Fingerelemente (22) jeweils von wenigstens einer gekrümmten Stellung in wenigstens eine gestreckte Stellung und zurück verstellt werden können,
ferner mit wenigstens einem unterhalb des wenigstens einen Handelements (20) angeordneten weiteren Handelements (24) und einer unterhalb des wenigstens einen weiteren Handelements (24) angeordneten Bandfördereinrichtung.

## Claims

1. Method for unloading a container (23) having packages (9), in particular a box body, swap container or roll container, with a rail device (27) comprising at least one rail (25), wherein at least one hand element (20) displaceable in a longitudinal direction of the rail (25) is provided on the at least one rail (25), wherein the hand element (20) has a plurality of finger elements (22), wherein the finger elements (22) respectively have at least two flexible flank elements (2, 3) extending together from one end (4) of the finger element (22) to the opposite end (5) of the finger element (22), wherein respectively the at least two flexible flank elements (2,3) of the finger elements (22) are each flexibly connected to one another via a plurality of webs (6), so that the finger elements (22) can each be adjusted from at least one curved position into at least one stretched position and back, wherein the packages (9) are stacked in the container (23), wherein the stacked packages (9) form an end face (28),
- wherein the rail device (27) is brought close to the end face (28) of the stacked packages (9),
- wherein the at least one hand element (20) grips at least one package of the stack of packages (9) and removes it from the stack of packages (9), - wherein the at least one hand element (20) is displaced along the at least one rail (25) after the at least one package (9) has been removed from the stack (21) of packages (9),
- wherein the at least one hand element (20), after the displacement along the at least one rail element (25), grips and removes from the stack (21) of packages (9) at least one further package (9) of the stack (21) of packages (9) ,
- wherein the at least one hand element (20,24) successively removes at least one package (9) from the stack (21) of packages (9) and moves the removed package (9) into at least one further hand element (24) arranged below the at least one hand element (20),
- wherein the at least one further hand element (24) at least partially catches the respective at least one package (9) and forwards it in an at least partially braked manner, and
- wherein the packages (9) removed from the stack (21) of packages (9) are moved downwards onto a belt conveyor device (29) arranged below the at least one further hand element (24).

2. Method according to claim 1, wherein the at least one hand element (20) is pressed against the stack (21) of packages (9) in a gripping direction in such a way that at least one flank element (2, 3) of at least one finger element (22) is partially pressed in and the at least one finger element (22) is displaced from an extended position into a curved position.

3. Method according to claim 1 or 2, wherein the at least one hand element (20, 24) and/or at least one finger element (22) is displaced from a curved position into an extended position and/or back via a drive unit for displacing the at least two flank elements (2, 3) in a longitudinal direction of the finger element (22) relative to one another.

4. The method according to any one of claims 1 to 3, wherein the at least one hand element (20, 24) and/or at least one finger element (22) is used with at least one pressure sensor, preferably on at least one flank element (2, 3), and wherein, preferably, the at least one pressure sensor detects the pressure on the at least one hand element (20, 24), on at least one finger element (22) and/or on at least one flank element (2, 3) of at least one finger element (22)

5. The method according to any one of claims 1 to 4, wherein the packages (9) removed from the stack (21) of packages (9) are moved onto the belt conveyor device (29), comprising a telescopic belt conveyor

6. Method according to one of claims 1 to 5,
- wherein the position of the stack (21) of packages (9), the contour of the stack (21) of packages (9) and/or the contour of the end face (28) of the stack (21) of packages (9) is at least partially detected by a sensor (38), preferably an optical sensor, in particular a camera, and
- in which, preferably, the movement of the hand element (20, 24) is controlled at least partially dependently of the position and/or contour of the stack (21) detected by the sensor.

7. Method according to one of claims 1 to 6,
- in which the at least one hand element (20, 24) and/or the at least one rail (25, 26) is adjusted upwards or downwards depending on the height of the stack (21) of packages (9), on the position of the stack (21) of packages (9), on the contour of the stack (21) of packages (9) and/or on the contour of the end face (28) of the stack (21) of packages (9).

8. Method according to one of claims 1 to 7, in which the at least one hand element (20, 24) is displaced along the at least one rail (25, 26) as a function of the position of the stack (21) of packages (9), of the contour of the stack (21) of packages (9) and/or of the contour of the end face (28) of the stack (21) of packages (9).

9. Method according to one of claims 1 to 8, in which packages (9) picked up one after the other by the at least one hand element (24) are passed on successively in a separated manner by moving the finger elements (22) of the at least one further hand element (24) with respect to one another.

10. The method according to any one of claims 1 to 9,
- wherein the at least one further hand element (24) is adjusted laterally and/or vertically in dependence on the position of the at least one other hand element (24) and
- wherein, preferably, the at least one further hand element (24) is adjusted together with the at least one other hand element (20), in particular while maintaining an at least essentially constant distance from each other

11. Method according to one of claims 1 to 10,
- wherein the at least one further hand element (20, 24) is displaced on the at least one rail (25, 26) or on at least one further rail (34) in the longitudinal direction of the respective rail (25, 26) and/or is displaced upwards or downwards and
- wherein, preferably, the at least one further rail (25, 26) is displaced upwards and/or downwards.

12. Method according to one of claims 1 to 11, in which the at least one further hand element (24) and/or the at least one further rail (26) is adjusted in height dependently on the height of the stack (21) of packages (9), on the position of the stack (21) of packages (9), on the contour of the stack (21) of packages (9), on the contour of the end face (28) of the stack (21) of packages (9) and/or on the position of the at least one upper manual element (20).

13. The method according to any one of claims 1 to 12
in which the at least one further hand element (24) is displaced dependently on the position of the stack (21) of packages (9), on the contour of the stack (21) of packages (9), on the contour of the end face (28) of the stack (21) of packages (9) and/or on the position of the at least one upper hand element (20) along the at least one, in particular further, rail (26).

14. Method according to any one of claims 1 to 13,
in which the at least one rail device (27), in particular with the at least one further rail (26), the at least one rail and/or the at least one further rail (26) is moved, in particular stepwise, into the container (23).

15. Device for unloading a container (23) having packages (9), in particular a box body, swap container or roll container, according to a method of claims 1 to 14, with a rail device (27) comprising at least one rail (25), wherein at least one hand element (20) displaceable in the longitudinal direction of the rail (25) is provided on the at least one rail (25), wherein the hand element (20) has a plurality of finger elements (22), wherein the finger elements (22) respectively have at least two flexible flank elements (2, 3) extending together from one end (4) of the finger element (22) to the opposite end (5) of the finger element (22), wherein respectively the at least two flexible flank elements (2,3) of the finger elements (22) are respectively flexibly connected to one another via a plurality of webs (6), so that the finger elements (22) can respectively be adjusted from at least one curved position into at least one stretched position and back, furthermore with a further hand element (24) arranged below the at least one hand element (20) and a belt conveyor device arranged below the at least one further hand element (24).

## Revendications

1. Méthode pour décharger un conteneur (23) ayant des colis (9), en particulier une caisse, un conteneur interchangeable ou un conteneur roulant, avec un dispositif de rails (27) comprenant au moins un rail (25), où au moins un élément manuel (20) déplaçable dans la direction longitudinale du rail (25) est prévu sur l'au moins un rail (25), où l'élément manuel (20) a une pluralité d'éléments de doigt (22), où les éléments de doigt (22) ont chacun au moins deux éléments de flanc flexibles (2,3), où les au moins deux éléments de flanc flexibles (2, 3) des éléments de doigt (22) sont respectivement reliés entre eux de manière flexible par l'intermédiaire d'une pluralité de nervures (6), de sorte que les éléments de doigt (22) peuvent être déplacés respectivement d'au moins une position courbée dans au moins une position étirée et inversement, où les colis (9) sont empilés dans le récipient (23), où les colis empilés (9) forment une face frontale (28), où le dispositif de rail (27) est rapproché de la face frontale (28) des colis empilés (9), où le au moins un élément manuel (20) saisit au moins un coli de la pile de colis (9) et l'enlève de la pile de colis (9), où le au moins un élément manuel (20) est déplacé le long du au moins un rail (25) après l'enlèvement du au moins un coli (9) de la pile (21) de colis (9), où où e au moins un élément manuel (20), après avoir été déplacé le long du au moins un élément de rail (25), saisit au moins un autre coli (9) de la pile (21) de colis (9) et l'enlève de la pile (21) de colis (9), où le au moins un élément manuel (20,24) enlève successivement au moins un coli (9) de la pile (21) de colis (9) et déplace le coli (9) enlevé dans au moins un autre élément manuel (24) disposé au-dessous du au moins un élément manuel (20), où l'au moins un autre élément manuel (24) saisit au moins partiellement l'au moins un colis (9) respectif et le transmet de manière au moins partiellement freinée, et où les colis (9) enlevés de la pile (21) de colis (9) sont déplacés vers le bas sur un dispositif de transport à bande (29) disposé au-dessous de l'au moins un autre élément manuel (24).

2. Méthode selon la revendication 1, où l'au moins un élément manuel (20) est pressé dans une direction de saisi contre la pile (21) de colis (9) de telle sorte qu'au moins un élément de flanc (2, 3) d'au moins un élément de doigt (22) est partiellement enfoncé et que l'au moins un élément de doigt (22) est déplacé d'une position étirée dans une position incurvée.

3. Méthode selon la revendication 1 ou 2, où l'au moins un élément manuel (20, 24) et/ou l'au moins un élément de doigt (22) est déplacé d'une position incurvée à une position étirée et/ou inversement l'un par rapport à l'autre dans une direction longitudinale de l'élément de doigt (22) par une unité d'entrainement pour un réglage des au moins deux éléments de flanc (2, 3).

4. Méthode selon l'une des revendications 1 à 3, où le au moins un élément manuel (20, 24) et/ou le au moins un élément de doigt (22) est utilisé avec au moins un capteur de pression, de préférence sur au moins un élément de flanc (2, 3), et où, de préférence, le au moins un capteur de pression détecte la pression sur le au moins un élément manuel (20, 24), sur au moins un élément de doigt (22) et/ou sur au moins un élément de flanc (2, 3) d'au moins un élément de doigt (22)

5. Méthode selon l'une des revendications 1 à 4, où les colis (9) retirés de la pile (21) de colis (9) sont déplacés vers le dispositif de transport à bande (29), comprenant un transporteur à bande télescopique

6. Méthode selon l'une des revendications 1 à 5, où la position de la pile (21) de colis (9), le contour de la pile (21) de colis (9) et/ou le contour de la face frontale (28) de la pile (21) de colis (9) sont détectés au moins partiellement par un capteur (38), de préférence un capteur optique, en particulier une caméra, et où, de préférence, le mouvement de l'élément manuel (20, 24) est commandé au moins partiellement en fonction de la position et/ou du contour de la pile (21) détectés par le capteur.

7. Méthode selon l'une des revendications 1 à 6, où le au moins un élément manuel (20, 24) et/ou le au moins un rail (25, 26) est déplacé vers le haut ou vers le bas en fonction de la hauteur de la pile (21) de colis (9), de la position de la pile (21) de colis (9), du contour de la pile (21) de colis (9) et/ou du contour du côté frontal (28) de la pile (21) de colis (9)

8. Méthode selon l'une des revendications 1 à 7, où le au moins un élément manuel (20, 24) est déplacé le long du au moins un rail (25, 26) en fonction de la position de la pile (21) de colis (9), du contour de la pile (21) de colis (9) et/ou du contour de la face frontale (28) de la pile (21) de colis (9).

9. Méthode selon l'une des revendications 1 à 8, où les colis (9) saisis successivement par le au moins un élément manuel (24) sont transférés de manière séparés, individuellement successivement par un déplacement des éléments de doigts (22) dudit au moins un autre élément manuel (24) les uns par rapport aux autres.

10. Méthode selon l'une des revendications 1 à 9, où le au moins un autre élément manuel (24) est déplacé latéralement et/ou en hauteur en fonction de la position du au moins un autre élément manuel (24) et où, de préférence, le au moins un autre élément manuel (24) est déplacé conjointement avec le au moins un autre élément manuel (20), en particulier en conservant une distance au moins essentiellement constante entre eux

11. Méthode selon l'une des revendications 1 à 10, où le au moins un autre élément manuel (20, 24) est déplacé sur le au moins un rail (25, 26) ou sur au moins un autre rail (34) dans la direction longitudinale du rail respectif (25, 26) et/ou vers le haut ou vers le bas et où, de préférence, le au moins un autre rail (25, 26) est déplacé vers le haut et/ou vers le bas.

12. Méthode selon l'une des revendications 1 à 11, où le au moins un autre élément manuel (24) et/ou le au moins un autre rail (26) est déplacé en hauteur dépendent de la hauteur de la pile (21) de colis (9), de la position de la pile (21) de colis (9), du contour de la pile (21) de colis (9), du contour de la face frontale (28) de la pile (21) de colis (9) et/ou de la position du au moins un élément manuel supérieur (20).

13. Méthode selon l'une des revendications 1 à 12
où l'au moins un autre élément manuel (24) est déplacé le long de l'au moins un rail (26), en particulier supplémentaire, en fonction de la position de la pile (21) de colis (9), du contour de la pile (21) de colis (9), du contour de la face frontale (28) de la pile (21) de colis (9) et/ou de la position de l'au moins un élément manuel supérieur (20).

14. Méthode selon l'une des revendications 1 à 13,
où le au moins un dispositif de rail (27), en particulier avec le au moins un autre rail (26), le au moins un rail et/ou le au moins un autre rail (26) est introduit, en particulier de manière pas à pas dans le conteneur (23).

15. Dispositif pour décharger un conteneur (23) ayant des colis (9), en particulier une caisse, un conteneur interchangeable ou un conteneur roulant, selon la méthode des revendications 1 à 14, avec un dispositif de rail (27) comprenant au moins un rail (25), où au moins un élément manuel (20) déplaçable dans la direction longitudinale du rail (25)est prévu sur le au moins un rail (25), où l'élément manuel (20) a une pluralité d'éléments de doigt (22), où les éléments de doigt (22) ont respectivement au moins deux éléments de flanc flexibles (2,3), où les au moins deux éléments de flanc flexibles (2, 3) des éléments de doigt (22) sont respectivement reliés entre eux de manière flexible par une pluralité de barrettes (6), de sorte que les éléments de doigt (22) peuvent être déplacés respectivement d'au moins une position incurvée dans au moins une position étirée et inversement, en outre avec un autre élément manuel (24) disposé en dessous de l'au moins un élément manuel (20) et un dispositif de transport à bande disposé en dessous de l'au moins un autre élément manuel (24).
